# FASCICULE DE BREVET EUROPEEN

(11) **EP 2 379 638 B1**
(45) Date de publication et mention de la délivrance du brevet: **05.03.2014**
(21) Numéro de dépôt: 09796626.1
(22) Date de dépôt: 16.12.2009
(51) Int. Cl.: C08L 15/00, C08L 25/16, C08K 3/36, C08K 3/04, B60C 1/00

(54) **COMPOSITION DE CAOUTCHOUC POUR PNEUMATIQUE A BASE DE CAOUTCHOUC NATUREL EPOXYDE ET D'UNE RESINE PLASTIFIANTE**
KAUTSCHUKZUSAMMENSETZUNG FÜR EINEN REIFEN, ENTHALTEND EPOXID-NATURKAUTSCHUK UND EIN WEICHMACHENDES HARZ
RUBBER COMPOSITION FOR A TYRE CONTAINING EPOXIDE NATURAL RUBBER AND A PLASTICISING RESIN

(30) Priorité: 19.12.2008 FR 0858862
(43) Date de publication de la demande: 26.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: LOPITAUX, Garance, F-03330 Valignat (FR); VASSEUR, Didier, F-63100 Clermont-Ferrand (FR); KOBAYASHI, Kyoko, 63100 Clermont Ferrand (FR)
(74) Mandataire: Ribière, Joel
(86) Numéro de dépôt international: PCT/EP2009/009044
(87) Numéro de publication internationale: WO 2010/069559

(56) Documents cités:
- EP-A1- 1 514 901
- JP-A- 2008 303 328
- US-A1- 2007 037 908

## Description

La présente invention se rapporte aux compositions de caoutchoucs destinées notamment à la fabrication de pneumatiques ou de produits semi-finis pour pneumatiques, elle est plus particulièrement relative aux compositions de caoutchoucs à base de caoutchouc naturel époxydé (ci après « ENR ») et de systèmes plastifiants, utilisables pour la fabrication de bandes de roulement de pneumatiques.

Une bande de roulement de pneumatique doit obéir de manière connue à un grand nombre d'exigences techniques, souvent antinomiques, parmi lesquelles une faible résistance au roulement, une résistance élevée à l'usure, ainsi qu'une adhérence élevée sur route sèche comme mouillée.

L'amélioration combinée des propriétés d'adhérence et de résistance au roulement reste une préoccupation constante des concepteurs de pneumatiques.

Il est connu d'utiliser des élastomères ENR dans des bandes de roulement de pneumatiques pour améliorer certaines de leurs propriétés d'usage, en particulier les performances d'adhérence sur sol mouillé, de résistance au roulement et de résistance à l'abrasion, comme décrit par exemple dans les documents US 7371791, EP 0644235 ou EP 1577341.

Par ailleurs, les compositions de caoutchouc pour pneumatiques comportent de manière connue des agents plastifiants utilisés pour la préparation ou synthèse de certains élastomères diéniques, pour améliorer la processabilité desdites compositions à l'état cru ainsi que certaines de leurs propriétés d'usage à l'état cuit comme par exemple, dans le cas des bandes de roulement de pneumatiques, leur adhérence sur sol mouillé ou encore leur résistance à l'abrasion et aux coupures. En particulier, la demande WO 2005/087859 a décrit l'utilisation de résines hydrocarbonées terpène, telles que les résines polylimonène pour améliorer la résistance à l'écaillement.

Des résines de (co)polymères terpène ont été également utilisées pour la fabrication de compositions de caoutchouc à base d'ENR (voir brevet US 7 371 791 précité ainsi que le brevet JP. 2008-303328 et le brevet US 2007/0037908), destinées à des bandes de roulement de pneumatique à résistance à l'abrasion améliorée.

Poursuivant leurs recherches, les Demanderesses ont découvert une composition de caoutchouc nouvelle, comportant un élastomère ENR associé à un agent plastifiant spécifique, qui permet d'obtenir un compromis de propriétés encore amélioré, favorable à l'adhérence sur sol mouillé et à la résistance au roulement des bandes de roulement de pneumatiques.

Ainsi, un premier objet de l'invention concerne une composition de caoutchouc utilisable notamment en bande de roulement de pneumatiques, à base d'au moins :
- un caoutchouc naturel époxydé (ENR) ;
- une charge renforçante ;
- à titre d'agent plastifiant, une résine de polymère alpha-méthyl-styrène.

L'invention a également pour objet ces pneumatiques eux-mêmes, lorsqu'ils comportent une composition conforme à l'invention, en particulier dans leur bande de roulement.

Les pneumatiques de l'invention sont particulièrement destinés à équiper des véhicules à moteur de type tourisme, SUV ("*Sport Utility Vehicles*"), deux roues (notamment motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil, autres véhicules de transport ou de manutention.

L'invention ainsi que ses avantages seront aisément compris à la lumière de la description et des exemples de réalisation qui suivent.

### I - MESURES ET TESTS UTILISES

Les compositions de caoutchouc sont caractérisées, avant et après cuisson, comme indiqué ci-après.

### I.1 - Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation au taux d'extension prévu pour la mesure elle-même) les modules sécants nominaux (ou contraintes apparentes, en MPa) à 100% d'allongement (noté MA100). On mesure également les contraintes à la rupture (en MPa, noté CR) et les allongements à la rupture (en %, noté AR). Toutes ces mesures de traction sont effectuées dans les conditions normales de température (23 ± 2°C) et d'hygrométrie (50 ± 5% d'humidité relative), selon la norme française NF T 40-101 (décembre 1979).

### I.2 - Dureté shore A

La dureté shore A des compositions après cuisson est appréciée conformément à la norme ASTM D 2240-86.

### I.3 - Propriétés dynamiques

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, lors d'un balayage en température, sous une contrainte fixe de 0,7 MPa, on enregistre la valeur de tan(δ) observée à - 10°C (soit tan(δ)-_{10°C}) et la valeur de tan(δ) observée à 40°C (soit tan(δ)_{40°C}).

On rappelle que, de manière bien connue de l'homme du métier, la valeur de tan(δ)_{-10°C} est représentative du potentiel d'adhérence sur sol mouillé : plus tan(δ)_{-10°C} est élevée, meilleure est l'adhérence. La valeur de tan(δ)_{40°C} est représentative de l'hystérèse du matériau donc de la résistance au roulement : plus tan(δ)_{40°C} est faible, plus la résistance au roulement est réduite.

### II - CONDITIONS DE REALISATION DE L'INVENTION

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

La composition de caoutchouc selon l'invention comprend donc au moins un caoutchouc naturel époxydé (ENR), une charge renforçante et, à titre d'agent plastifiant, une résine de polymère alpha-méthyl-styrène, composants qui vont être décrits en détail ci-après.

### II.1 - Caoutchouc naturel époxydé

La composition de caoutchouc conforme à l'invention a pour première caractéristique essentielle de comprendre un caoutchouc naturel époxydé (en abrégé « ENR »).

Les caoutchoucs naturels époxydés sont utilisés pour leurs propriétés d'excellente résistance à l'abrasion, résistance en fatigue, résistance en flexion, et peuvent être notamment utilisés pour fabriquer des bandes de roulement ou des flancs de pneumatiques.

Ils peuvent être obtenus par époxydation du caoutchouc naturel, par exemple par des procédés à base de chlorohydrine ou de bromohydrine ou des procédés à base de peroxydes d'hydrogène, d'alkyl hydropéroxides ou de peracides (tel que acide peracétique ou acide performique).

Le taux d'époxydation (% en mole) de l'ENR est préférentiellement d'au moins 3 %, plus préférentiellement d'au moins 5 %, par exemple dans un domaine de 10 à 60%. Quand le taux d'époxydation est inférieur à 3%, l'effet technique visé (amélioration d'adhérence et de résistance au roulement) risque d'être insuffisant ; au-delà de 60%, la masse moléculaire du polymère diminue fortement. Pour toutes ces raisons, le taux d'époxydation de l'ENR est plus préférentiellement compris dans un domaine de 10% à 50%.

De tels ENR préférentiels sont disponibles commercialement, par exemple vendus sous les dénominations "ENR-25" et "ENR-50" (taux d'époxydation respectifs de 25% et 50%) par la société Guthrie Polymer.

La composition de caoutchouc selon l'invention comprend de préférence plus de 30 pce, plus préférentiellement plus de 40 pce d'ENR ; plus préférentiellement encore, le taux d'ENR est compris dans un domaine de 50 à 100 pce, en particulier dans un domaine de 70 à 100 pce.

Au caoutchouc naturel époxydé ci-dessus, peut être ou peuvent être associé(s) un ou plusieurs autre(s) élastomère(s) diénique(s). Par élastomère ou caoutchouc "diénique", doit être compris de manière connue un élastomère issu au moins en partie (i.e., un homopolymère ou un copolymère) de monomères diènes (monomères porteurs de deux doubles liaisons carbone-carbone, conjuguées ou non).

L'élastomère diénique éventuel complémentaire est choisi préférentiellement dans le groupe des élastomères diéniques fortement insaturés constitué par les polybutadiènes (BR), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Conviennent notamment les polybutadiènes ayant une teneur (% molaire) en unités -1,2 comprise entre 4% et 80% ou ceux ayant une teneur (% molaire) en cis-1,4 supérieure à 80%, les copolymères de butadiène-styrène et en particulier ceux ayant une Tg (température de transition vitreuse, mesurée selon ASTM D3418) entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 10°C et - 50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

Selon un autre mode de réalisation particulier, l'élastomère diénique éventuel complémentaire pourrait être également un élastomère isoprénique. Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Le taux d'élastomère diénique éventuel complémentaire est de préférence au plus égal à 70 pce, plus préférentiellement inférieur à 60 pce, notamment compris dans un domaine de 0 à 30 pce.

### II.2 - Charge renforcante

On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelles que soient sa couleur et son origine naturelle ou de synthèse), encore appelée charge "blanche", charge "claire" voire "charge non noire" ("*non-black filler*") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m²/g, plus préférentiellement comprise entre 60 et 300 m²/g.

De manière préférentielle, le taux de charge renforçante totale (noir de carbone et/ou charge inorganique renforçante telle que silice) est supérieur à 50 pce, plus préférentiellement entre 50 et 150 pce. L'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise une charge renforçante comportant entre 50 et 150 pce, plus préférentiellement entre 50 et 130 pce de charge inorganique, particulièrement de silice, et optionnellement du noir de carbone ; le noir de carbone, lorsqu'il est présent, est utilisé de préférence à un taux inférieur à 20 pce, plus préférentiellement inférieur à 10 pce (par exemple entre 0,1 et 10 pce).

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:

(I) Z - A - Sₓ - A - Z ,

dans laquelle:
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 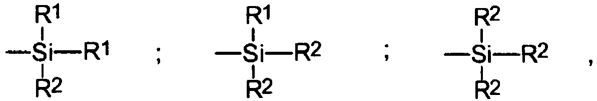 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-akyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane (R² = OH dans la formule I ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080.

Bien entendu pourraient être également utilisés des mélanges des agents de couplage précédemment décrits, comme décrit notamment dans la demande WO 2006/125534 précitée.

Dans les couches élastomères de protection, lorsqu'elles sont renforcées par une charge inorganique telle que silice, la teneur en agent de couplage est préférentiellement comprise entre 4 et 15 pce, plus préférentiellement entre 4 et 12 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### II.3 - Résine de polymère alpha-méthyl-styrène

La composition selon l'invention a pour autre caractéristique essentielle de comporter, à titre d'agent plastifiant, une résine d'homopolymère alpha-méthyl-styrène, ou de copolymère d'alpha-méthyl-styrène dont la teneur en monomère alpha-méthyl-styrène est supérieure à 50% molaire.

De manière connue de l'homme du métier, la dénomination "résine" est réservée dans la présente demande, par définition, à un composé qui est d'une part solide à température ambiante (23°C) (par opposition à un composé plastifiant liquide tel qu'une huile), d'autre part compatible (c'est-à-dire miscible au taux utilisé) avec la composition de caoutchouc à laquelle il est destiné, de manière à agir comme un véritable agent diluant.

Les résines hydrocarbonées sont des polymères bien connus de l'homme du métier, miscibles par nature dans les compositions d'élastomère(s) diénique(s) lorsqu'elles sont qualifiées en outre de "plastifiantes". Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods*").

De préférence la résine de polymère alpha-méthyl-styrène présente au moins une, plus préférentiellement l'ensemble, des caractéristiques suivantes :
- une Tg supérieure à 20°C, plus préférentiellement supérieure à 30°C ;
- une masse moléculaire moyenne en nombre (Mn) comprise entre 400 et 2000 g/mol, plus préférentiellement entre 500 et 1500 g/mol ;
- un indice de polymolécularité (Ip) inférieur à 3, de préférence inférieur à 2 (rappel : Ip = Mw/Mn avec Mw masse moléculaire moyenne en poids).

La température de transition vitreuse Tg est mesurée de manière connue par DSC (*Differential Scanning Calorimetry*), selon la norme ASTM D3418 (1999). La macrostructure (Mw, Mn et Ip) de la résine de polymère alpha-méthyl-styrène est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Par résine de polymère alpha-méthyl-styrène, on entend dans la présente demande, par définition, tout homopolymère du monomère alpha-méthyl-styrène, tout copolymère comportant au moins des unités issues du monomère alpha-méthyl-styrène et des unités issues d'un autre ou plusieurs autres monomère(s), ou encore tout mélange de tels polymères.

Dans le cas d'un copolymère, la teneur en unités issues du monomère alpha-méthyl-styrène est supérieure à 50%, plus préférentiellement supérieure à 60%, notamment comprise dans un domaine de 70 à 95% (% molaire).

Selon un mode particulier de l'invention, on utilise un homopolymère alpha-méthyl-styrène.

Selon un autre mode particulier, on utilise un copolymère d'au moins les deux monomères suivants : alpha-méthyl-styrène d'une part, styrène d'autre part, la teneur en alpha-méthyl-styrène étant supérieure à 50% molaire.

A titre d'exemple de résines préférentielles, on peut citer notamment les résines alpha-méthyl-styrène modifiées phénol, notamment les résines modifiées phénol de copolymère styrène/ alpha-méthyl-styrène. Pour caractériser ces résines modifiées phénol, on rappelle qu'est utilisé de manière connue un indice dit "indice hydroxyle" (mesuré selon norme ISO 4326 et exprimé en mg KOH/g).

Les résines alpha-méthyl-styrène, notamment modifiées phénol, décrites ci-dessus sont bien connues de l'homme du métier et disponibles commercialement, par exemple vendues par la société Arizona Chemical sous les dénominations "Sylvares 540" (Mn 620 g/mol ; Ip 1,3 ; Tg 36°C ; indice d'hydroxyle 56 mg KOH/g) ; "Silvares 600" (Mn 850 g/mol ; Ip 1,4 ; Tg 50°C ; indice d'hydroxyle de 31 mg KOH/g).

De manière préférentielle, le taux de résine de polymère alpha-méthyl-styrène est compris dans un domaine de 5 à 60 pce. En dessous du minimum indiqué, l'effet technique visé peut s'avérer insuffisant, alors qu'au-delà du maximum le pouvoir collant des compositions à l'état cru, sur les outils de mélangeage, peut dans certains cas devenir rédhibitoire du point de vue industriel. Pour ces raisons, le taux de résine de polymère alpha-méthyl-styrène est plus préférentiellement compris dans un domaine de 10 à 50 pce.

### II.4 - Additifs divers

Les compositions de caoutchouc conformes à l'invention comportent également tout ou partie des additifs usuels habituellement utilisés dans les compositions d'élastomères destinées notamment à la fabrication de bandes de roulement, comme par exemple des pigments, des agents de protection tels que cires anti-ozone, anti-ozonants chimiques, anti-oxydants, d'autres agents plastifiants que ceux précités, par exemple des huiles d'extension, que ces dernières soient de nature aromatique ou non-aromatique, notamment des huiles très faiblement ou non aromatiques, par exemple du type naphténiques ou paraffiniques, à haute ou de préférence à basse viscosité, des huiles MES ou TDAE, des huiles végétales, des agents anti-fatigue, des résines renforçantes, des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides, des accélérateurs de vulcanisation, des activateurs de vulcanisation.

Ces compositions peuvent également comporter, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### II.5 - Préparation des compositions de caoutchouc

Les compositions de l'invention peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- incorporer à un élastomère diénique ENR, au cours d'une première étape (dite "non-productive"), au moins une charge renforçante et une résine de polymère alpha-méthyl-styrène, en malaxant thermomécaniquement le tout (par exemple en une ou plusieurs fois), jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (ENR et éventuel autre élastomère diénique, résine de polymère alpha-méthyl-styrène, charge renforçante et agent de couplage dans le cas d'une charge inorganique), puis dans un deuxième temps, par exemple après une à deux minutes de malaxage, les autres additifs, éventuels agents de recouvrement de la charge ou de mise en oeuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'une bande de roulement.

L'invention concerne les compositions de caoutchouc, les pneumatiques et les bandes de roulement de pneumatiques précédemment décrits tant à l'état cru (c'est à dire, avant cuisson) qu'à l'état cuit (c'est à dire, après réticulation ou vulcanisation).

### III - EXEMPLES DE REALISATION DE L'INVENTION

### III.1 - Préparation des compositions

On procède pour les essais qui suivent de la manière suivante : on introduit dans un mélangeur interne (taux de remplissage final : environ 70% en volume), dont la température initiale de cuve est d'environ 60 °C, successivement la charge (silice ou noir de carbone), l'agent de couplage en présence de silice, l'ENR, la résine de polymère alpha-méthyl-styrène (ici, un copolymère modifié phénol de styrène/ alpha-méthyl-styrène), ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre et un accélérateur type sulfénamide sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'une bande de roulement.

### III.2 - Essais

Ces essais démontrent l'amélioration, en termes d'adhérence sur sol mouillé et de résistance au roulement, apportée par une composition conforme à l'invention, comparativement à une composition témoin.

Pour cela, deux compositions de caoutchouc ont été préparées comme indiqué précédemment, une conforme à l'invention (notée ci-après C.2) et une non conforme (témoin noté ci-après C.1).

Les compositions C.1 et C.2 comprennent 100 pce d'ENR. La composition témoin C.1 comporte une résine polylimonène et la composition C.2 selon l'invention comporte une résine de polymère alpha-méthyl-styrène (copolymère modifié phénol de styrène/alpha-méthyl-styrène).

Leurs formulations (en pce ou parties en poids pour cent parties d'élastomère), leurs propriétés mécaniques ont été résumées dans les tableaux 1 et 2 annexés.

On note tout d'abord que les propriétés mécaniques (module MA100 et propriétés à la rupture) des compositions C.1 et C.2 sont sensiblement identiques. L'ajout de résine de polymère alpha-méthyl-styrène ne modifie pas la rigidité (dureté shore A) de la composition selon l'invention, comparativement au témoin C.1.

Mais on note surtout que la composition C.2 selon l'invention présente des propriétés dynamiques qui sont de manière inattendue sensiblement améliorées :
- avec d'une part une valeur de tan(δ) à 40°C qui est plus faible par rapport à la composition témoin C.1, synonyme pour l'homme du métier d'une hystérèse et donc d'une résistance au roulement réduite ;
- d'autre part une valeur de tan(δ) à - 10°C qui est nettement plus élevée que celle de la composition C.1, indicateur reconnu d'une adhérence améliorée sur sol mouillé.

On peut donc en conclure que les améliorations ci-dessus sont obtenues grâce à l'utilisation de la résine de polymère alpha-méthyl-styrène.

En résumé, les résultats de ces essais démontrent que l'emploi combiné d'un caoutchouc naturel époxydé avec une résine de polymère alpha-méthyl-styrène, permet d'obtenir un compromis de propriétés amélioré, favorable à l'adhérence sur sol mouillé et à la résistance au roulement des bandes de roulement de pneumatiques.

**Tableau 1**

| Composition n° | C.1 | C.2 |
|---|---|---|
| ENR (1) | 100 | 100 |
| Charge (2) | 110 | 110 |
| Charge (3) | 4 | 4 |
| Agent de couplage (4) | 8.8 | 8.8 |
| Résine plastifiante (5) | 29 | - |
| Résine plastifiante (6) | - | 29 |
| Huile (7) | 6 | 6 |
| Acide stéarique (8) | 2.0 | 2.0 |
| ZnO (9) | 1.8 | 1.8 |
| Soufre (10) | 1.3 | 1.3 |
| CBS (11) | 2.0 | 2.0 |
| DPG (12) | 1.5 | 1.5 |
| Antioxydant (13) | 1.5 | 1.5 |

| | | |
|---|---|---|
| (1) "ENR-25" (société Guthrie Polymer). (2) silice : « Zeosil 1165 MP » de la société Rhodia, type « HD » (BET et CTAB : environ 160 m²/g) ; (3) noir de carbone N234 (grade ASTM) ; (4) agent de couplage TESTP (« Si69 » de la société Degussa) ; (5) résine polylimonène (« Dercolyte L120 de la société DRT) ; (6) résine de polymère alpha-méthyl-styrène (" Silvares 600" de Arizona Chemical) ; (7) trioléate de glycérol (huile de tournesol à 85 % en poids d'acide oléique, « lubrirob Tod 1880 » de la société Novance) (8) stéarine ("Pristerene" de la société Uniquema); (9) oxyde de zinc (grade industriel - société Umicore) ; (10) soufre ; (11) N-cyclohexyl-2-benzothiazyl-sulfénamide (Santocure CBS de la société Flexsys) ; (12) DPG = Diphénylguanidine (« Perkacit DPG » de la société Flexsys) ; (13) N-1,3-diméthylbutyl-N-phénylparaphénylènediamine (Santoflex 6-PPD de la société Flexsys). | | |

**Tableau 2**

| Composition n° | C.1 | C.2 |
|---|---|---|
| Shore A | 71 | 71 |
| MA 100 | 2.4 | 2.6 |
| AR | 412 | 417 |
| CR | 11 | 12 |
| Tg(δ)_{-10°C} | 0,720 | 0,860 |
| Tg(δ)_{40°C} | 0,333 | 0,310 |

## Revendications

1. Composition de caoutchouc à base d'au moins un caoutchouc naturel époxydé (en abrégé "ENR"), une charge renforçante et, à titre d'agent plastifiant, une résine d'homopolymère alpha-méthyl-styrène, ou de copolymère d'alpha-méthyl-styrène dont la teneur en monomère alpha-méthyl-styrène est supérieure à 50% molaire.

2. Composition selon la revendication 1, dans laquelle le taux de ENR est supérieur à 30 pce, de préférence supérieur à 40 pce.

3. Composition selon la revendication 2, dans laquelle le taux de ENR est compris dans un domaine de 50 à 100 pce.

4. Composition selon l'une quelconque des revendications 1 à 3, comportant en outre un élastomère diénique choisi dans le groupe constitué par les polybutadiènes, le caoutchouc naturel, les polyisoprènes de synthèse, les copolymères de butadiène, les copolymères d'isoprène et les mélanges de ces élastomères.

5. Composition selon l'une quelconque des revendications 1 à 4, dans laquelle la résine de polymère alpha-méthyl-styrène présente une Tg supérieure à 20°C.

6. Composition selon l'une quelconque des revendications 1 à 5, dans laquelle la résine de polymère alpha-méthyl-styrène présente une masse moléculaire moyenne en nombre comprise entre 400 et 2000 g/mol.

7. Composition selon l'une quelconque des revendications 1 à 6, dans laquelle la résine de polymère alpha-méthyl-styrène présente un indice de polymolécularité inférieur à 3.

8. Composition selon l'une quelconque des revendications 1 à 7, dans laquelle la résine de polymère alpha-méthyl-styrène est un copolymère de styrène et d'alpha-méthyl-styrène.

9. Composition selon l'une quelconque des revendications 1 à 8, dans laquelle la résine est une résine modifiée phénol.

10. Composition selon l'une quelconque des revendications 1 à 9, dans laquelle le taux de résine de polymère alpha-méthyl-styrène est compris dans un domaine de 5 à 60 pce, de préférence dans un domaine de 10 à 50 pce.

11. Composition selon l'une quelconque des revendications 1 à 10, dans laquelle la quantité de charge renforçante est supérieure à 50 pce, de préférence comprise entre 50 et 150 pce.

12. Pneumatique comportant une composition de caoutchouc selon l'une quelconque des revendications 1 à 11.

13. Pneumatique selon la revendication 12, la composition de caoutchouc étant présente dans la bande de roulement de ce pneumatique.

## Patentansprüche

1. Kautschukzusammensetzung auf Basis mindestens eines epoxidierten Naturkautschuks (abgekürzt "ENR"), eines verstärkenden Füllstoffs und eines alpha-Methylstyrol-Homopolymerharzes oder alpha-Methylstyrol-Copolymerharzes mit einem Gehalt an alpha-Methylstyrol von mehr als 50 Mol-% als Weichmacher.

2. Zusammensetzung nach Anspruch 1, in der der ENR-Gehalt mehr als 30 phe und vorzugsweise mehr als 40 phe beträgt.

3. Zusammensetzung nach Anspruch 2, in der der ENR-Gehalt in einem Bereich von 50 bis 100 phe liegt.

4. Zusammensetzung nach einem der Ansprüche 1 bis 3, die außerdem ein Dienelastomer aus der Gruppe bestehend aus Polybutadienen, Naturkautschuk, synthetischen Polyisoprenen, Butadien-Copolymeren, Isopren-Copolymeren und Mischungen dieser Elastomere umfasst.

5. Zusammensetzung nach einem der Ansprüche 1 bis 4, in der das alpha-Methylstyrol-Polymerharz eine Tg von mehr als 20°C aufweist.

6. Zusammensetzung nach einem der Ansprüche 1 bis 5, in der das alpha-Methylstyrol-Polymerharz ein zahlenmittleres Molekulargewicht zwischen 400 und 2000 g/mol aufweist.

7. Zusammensetzung nach einem der Ansprüche 1 bis 6, in der das alpha-Methylstyrol-Polymerharz einen Polymolekularitätsindex von weniger als 3 aufweist.

8. Zusammensetzung nach einem der Ansprüche 1 bis 7, in der es sich bei dem alpha-Methylstyrol-Polymerharz um ein Copolymer von Styrol und alpha-Methylstyrol handelt.

9. Zusammensetzung nach einem der Ansprüche 1 bis 8, wobei es sich bei dem Harz um ein modifiziertes Phenolharz handelt.

10. Zusammensetzung nach einem der Ansprüche 1 bis 9, in der der Gehalt an alpha-Methylstyrol-Polymerharz in einem Bereich von 5 bis 60 phe und vorzugsweise in einem Bereich von 10 bis 50 phe liegt.

11. Zusammensetzung nach einem der Ansprüche 1 bis 10, in der die Menge von verstärkendem Füllstoff mehr als 50 phe beträgt und vorzugsweise zwischen 50 und 150 phe liegt.

12. Reifen, umfassend eine Kautschukzusammensetzung nach einem der Ansprüche 1 bis 11.

13. Reifen nach Anspruch 12, wobei die Kautschukzusammensetzung in der Lauffläche dieses Reifens vorliegt.

## Claims

1. Rubber composition based on at least one epoxidized natural rubber (abbreviated to "ENR"), a reinforcing filler and, as plasticizing agent, an alpha-methylstyrene homopolymer resin or an alpha-methylstyrene copolymer resin for which the alpha-methylstyrene monomer content is greater than 50 mol%.

2. Composition according to Claim 1, in which the ENR content is greater than 30 phr and preferably greater than 40 phr.

3. Composition according to Claim 2, in which the ENR content is within a range of 50 to 100 phr.

4. Composition according to any one of Claims 1 to 3, comprising, in addition, a diene elastomer chosen from the group constituted by polybutadienes, natural rubber, synthetic polyisoprenes, butadiene copolymers, isoprene copolymers and mixtures of these elastomers.

5. Composition according to any one of Claims 1 to 4, in which the alpha-methylstyrene polymer resin has a T_{g} of greater than 20°C.

6. Composition according to any one of Claims 1 to 5, in which the alpha-methylstyrene polymer resin has a number-average molecular weight between 400 and 2000 g/mol.

7. Composition according to any one of Claims 1 to 6, in which the alpha-methylstyrene polymer resin has a polydispersity index of less than 3.

8. Composition according to any one of Claims 1 to 7, in which the alpha-methylstyrene polymer resin is a copolymer of styrene and of alpha-methylstyrene.

9. Composition according to any one of Claims 1 to 8, in which the resin is a phenol-modified resin.

10. Composition according to any one of Claims 1 to 9, in which the content of alpha-methylstyrene polymer resin is within a range of 5 to 60 phr and preferably within a range of 10 to 50 phr.

11. Composition according to any one of Claims 1 to 10, in which the amount of reinforcing filler is greater than 50 phr and preferably between 50 and 150 phr.

12. Tyre comprising a rubber composition according to any one of Claims 1 to 11.

13. Tyre according to Claim 12, the rubber composition being present in the tread of this tyre.
